Europäisches Patentamt

European Patent Office

Office européen des brevets

(11) Publication number: **0 381 930**
**A2**

## EUROPEAN PATENT APPLICATION

(21) Application number: 90100431.7

(22) Date of filing: 10.01.90

(51) Int. Cl.5: **B62D 53/08, B62D 47/02**

(30) Priority: 07.02.89 IT 1933389

(43) Date of publication of application: .
16.08.90 Bulletin 90/33

(84) Designated Contracting States:
DE ES FR GB IT

(71) Applicant: MAURI & C. S.a.s. di MAURI
Ambrogio e ZORLONI Costanza
Via Caravaggio, 24
I-20033 Desio (Prov. of Milano)(IT)

(72) Inventor: Mauri, Ambrogio
Via Garibaldi, 254
I-20033 Desio Milan(IT)

(74) Representative: Modiano, Guido et al
MODIANO, JOSIF, PISANTY & STAUB
Modiano & Associati Via Meravigli, 16
I-20123 Milano(IT)

(54) **Control unit for a rotatable platform for a three-axle articulated vehicle.**

(57) The present invention relates to a control unit of a rotatable platform for a three-axle articulated vehicle which comprises a pneumatic circuit (20) connected to a source of pressurized fluid (21) and to a braking element (5) arranged at the fifth wheel or rotating platform (7) of the articulated vehicle. The peculiarity of the invention resides in that the braking element is constituted by a disk brake (5) which has a braking disk (6) associated with the center of the fifth wheel (7) and rigidly associated with the rear body (2) of the vehicle, and a braking caliper (16) which acts on the braking disk (6) and is rigidly associated with the front body (1) of the vehicle. The pneumatic circuit actuates the braking caliper (16).

Fig.3

## CONTROL UNIT OF A ROTATABLE PLATFORM FOR A THREE-AXLE ARTICULATED VEHICLE

The present invention relates to a control unit of a rotatable platform for a three-axle articulated vehicle.

The Italian patent no. 1,176,769 in the name of the same Applicant, assumed included herein as reference, discloses a unit for controlling a multiple-disk brake for the rotating platform of a three-axle articulated vehicle.

Said patent discloses a particular pneumatic circuit which acts on the multiple-disk brake provided at the fifth wheel or rotating platform of an articulated vehicle.

The use of the multiple-disk brake and of the control circuit could cause an insufficient braking action which had to be integrated by the action of quick-acting shock absorbers.

Intervention could not occur in real time and entailed the sum of delays when the vehicle rear body, after a lateral movement, had moved back with an opposite direction, thus creating an oscillation phenomenon in the swing movement of the rear part of the vehicle.

At high speeds, generally above 85 km/h, said delays furthermore could give rise to a resonance phenomenon which created considerable problems in control and consequent elimination, with unavoidable difficulty in controlling the vehicle attitude in motion.

The aim of the invention is indeed to eliminate the defects which could be observed in the previously mentioned solution, by providing a control unit in which it is possible to exert a powerful braking action, considerably greater than that which can be obtained with the multiple- disk brake, and allows to eliminate oscillation or hunting phenomena.

Within the scope of the above described aim, a particular object of the invention is to provide a control unit which can offer an operational functionality of the vehicle, is free from mechanical breakages and is consequently much more reliable, as well as can ensure elimination of the failure in the brake operation due to the melting of grease with low melting point. The use of appropriate grease, due to the heating of the unit during use, causes in fact melting of the grease and consequently an infiltration between the brake lining disks; this infiltration can be observed only when it is so large as to make the multiple-disk brake noisy, such as for example when one or more brake lining disks perform no braking action and "slip" against the interposed steel disks.

Another object of the present invention is to provide a control device in which the complete functionality of the electropneumatic valves is ensured, with the possibility of safety intervention if one of the valves fails in its operation.

Not least object of the present invention is to provide a reliable and practical control unit which can be obtained from commonly commercially available elements.

The above described aim, as well as the objects mentioned and others which will become apparent hereinafter, are achieved by a control unit of a rotatable platform for a three-axle articulated vehicle, as defined in appended claim 1.

The characteristics and advantages will become apparent from the detailed description of a control unit of a rotatable platform for a three-axle articulated vehicle, illustrated only by way of non-limitative example in the accompanying drawings, wherein:

figure 1 is a schematic lateral elevation view of the chassis of the motor vehicle;

figure 2 is the pneumatic diagram of the control unit of the braking element;

figure 3 is an exploded perspective view of the braking element.

With reference to the above figures, the three-axle articulated motor vehicle, with power transmission system on the third axle, has a front part, generally indicated by the reference numeral 1, and a rear part 2 provided with the driving axle or third axle 3; the two parts are mutually joined by means of a rotatable platform generally indicated by the reference numeral 4.

A braking element, generally indicated by the reference numeral 5, is provided at the rotatable platform 4.

The important peculiarity of the invention resides in that the braking element 5 comprises a braking disk 6 rigidly associated with the center of the fifth wheel, indicated at 7, which is rigidly coupled to the rear body of the motor vehicle by means of a support 7a.

A braking caliper 16, rigidly associated with the front part of the motor vehicle, acts on the braking disk.

The braking calipers are actuated through a feed tube 15 which introduces compressed air to control the rotation by increasing friction. This action, exerted by the two calipers of the disk brake, is performed so as to avoid a rigid coupling between the front part and the rear part of the articulated motor vehicle, but simply to prevent a free and therefore uncontrolled mutual rotation of the two parts, making the vehicle more stable and maneuverable.

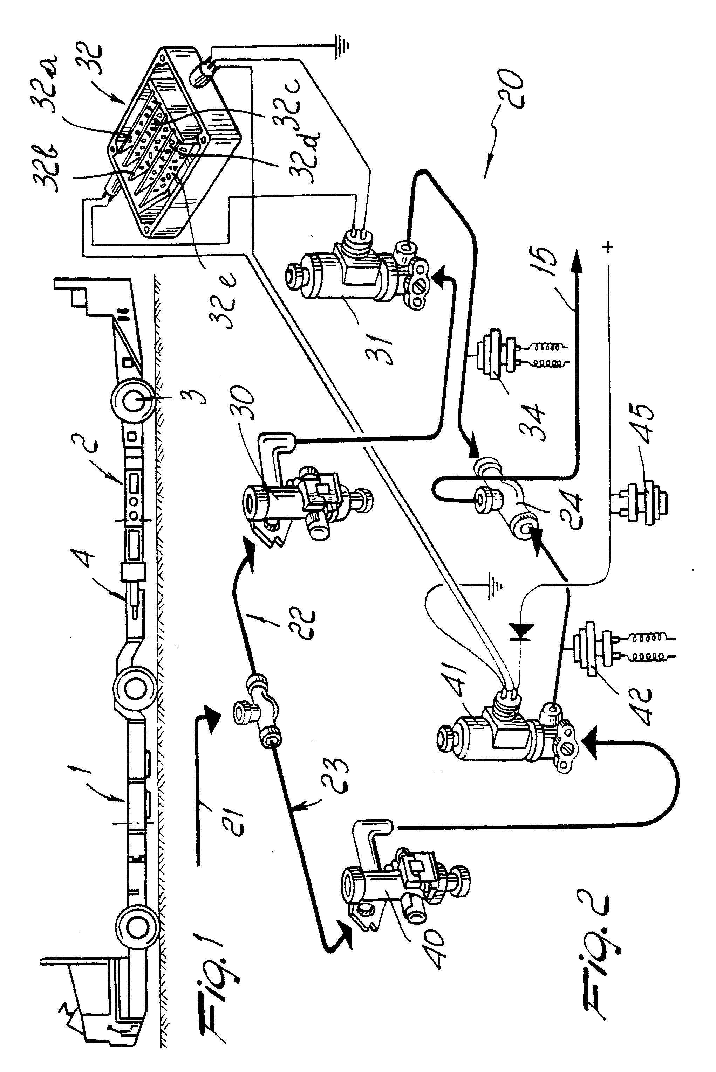

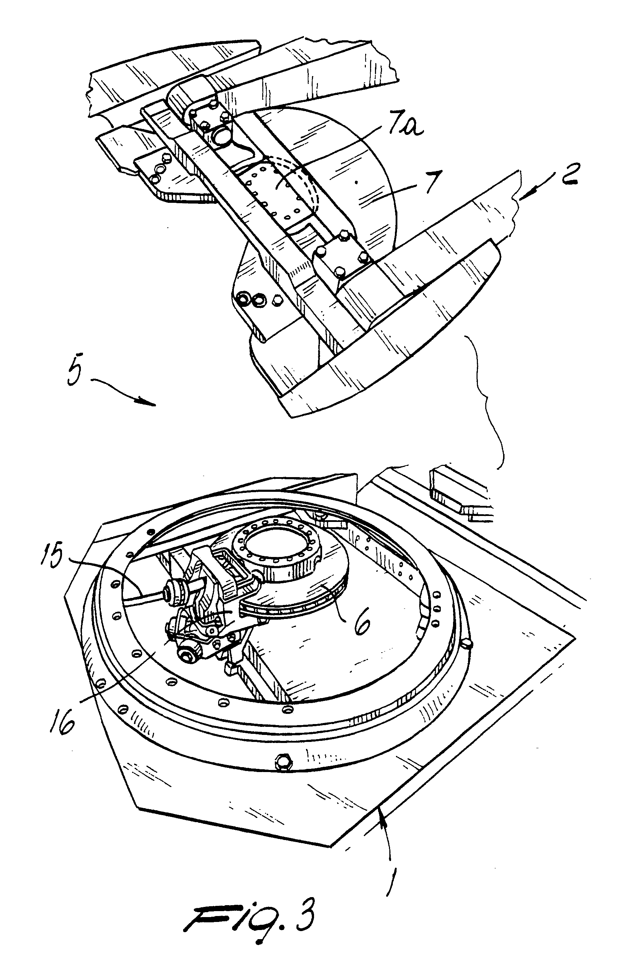

A control unit is provided to actuate said disk brake 5; its functional diagram is illustrated in figure 2.

More in detail, the control unit has a pneumatic circuit, generally indicated by the reference numeral 20, connected to a source for the supply of pressurized fluid, schematically indicated at 21. The pneumatic circuit has two branches arranged mutually in parallel, indicated at 22 and 23; the first branch, or lower-pressure branch, has a first pneumatic valve 30 which can be set to a preset pressure, so as to allow the flow of a fluid at said preset pressure, termed lower pressure, in the branch 22.

A first electropneumatic valve 31 is provided downstream of the first pneumatic valve 30 and is controlled by an electronic control unit, generally indicated by the reference numeral 32, which will be described in greater detail hereinafter. Said electronic control unit allows to activate the valve to open it when a first preset speed, indicated by the impulse speed detector, which is a speedometer detector mounted on the automatic gear, is reached.

Downstream of the first electropneumatic valve 31, the first branch 22 is connected to the second branch 23 through an inlet 24 and then to said disk brake 5 through the feed tube or duct 15.

The second branch 23 has a second pneumatic valve 40; downstream of the latter a second electropneumatic valve 41 is provided, controlled by a second output of the electronic control unit 32 which activates the electric valve 41 to open it when the motor vehicle reaches a second speed which is greater than said first speed.

A pressurized fluid at a greater pressure, set by the second pneumatic valve 40 and greater than the pressure of the fluid which flows in the first branch, flows in the second branch 23. The second branch is connected to the inlet 24 and is fed therefrom, through the feed tube 15, to the disk brake 5.

The second electropneumatic valve 41 is also controlled in its operation by the actuation of the pedal of the brake of the motor vehicle, so that when the brake pedal is actuated the disk brake 5 is braked with the maximum pressure.

If an automatic delaying device which acts as exhaust brake is provided, the second electropneumatic valve 41 can be connected directly to the detector 45 of said delay device.

It should be furthermore added that a first pressure detector 34 and a second pressure detector 42 are provided respectively downstream of the first electropneumatic valve 31 and the second electropneumatic valve 41; said detectors activate warning devices provided on the dashboard and/or pressure indicators.

According to an embodiment which has been found to be preferable from experimental tests but which must not be considered limitative, the first pneumatic valve 30 is set to a pressure value of 3.5 bar and the first electropneumatic valve 31 is activated when the motor vehicle reaches 39-40 km/h, whereas the second pneumatic valve 40 is preferably set to a pressure value of 5.3 bar and the second electropneumatic valve 41 is activated to open the branch 23 when the motor vehicle reaches a speed of 59-60 km/h or when the brake pedal is actuated.

The electronic control unit 32 is provided, for this purpose, with a first board 32a and with a second board 32b which generate respective actuation signals for valves 31 and 41 at the two preset speeds, i.e. at the lower intervention speed and at the upper intervention speed of the braking unit; a third safety board 32c and a fourth safety board 32d are also provided and are respectively and selectively actuated at an immediately higher speed value than the actuation speed of electropneumatic valves 31, 41 through boards 32a, 32b, when one or both of the boards 32a and 32b malfunction.

An indicator which warns of the actuation of the emergency boards simultaneously lights on the dashboard arranged in front of the driver.

A fifth board 32e is furthermore provided which allows to point out, next to said first warning device, the possible lack of air in the circuit.

The different functional capability of the boards is obtained by means of a potentiometer comprised in each board, i.e. it is possible to perform a board-by-board setting by means of an appropriate control system which simulates the speed of the vehicle. The operation is performed on a test bed before the boards are placed in the appropriate container.

The invention thus conceived is susceptible to numerous modifications and variations, all of which are within the scope of the inventive concept.

All the details may furthermore be replaced with other technically equivalent elements.

In practice, the materials employed, so long as compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A control unit of a rotatable platform for an articulated three-axle vehicle, comprising a pneumatic circuit (20) connected to a source of pressurized fluid (21) and to a braking element (5) arranged at the fifth wheel or rotatable platform (7) of an articulated motor vehicle, characterized in that said braking element is a disk brake (5) which has a braking disk (6) associated with the center of said fifth wheel (7) and rigidly associated with the rear body (2) of the three-axle vehicle, and a braking caliper (16) which acts on said braking disk and is rigidly associated with the front body (1) of said three-axle vehicle, said pneumatic circuit (20) actuating said braking caliper (16).

2. A control unit according to claim 1, characterized in that said pneumatic braking circuit (20) actuates said braking caliper (16) and has at least one first pneumatic valve (30) which can be set to a first pressure and at least one first electropneumatic valve (31) which controls the flow of pressurized fluid and is controlled by a speedometer device for detecting the speed of the articulated three-axle vehicle, said speedometer device driving an electronic control unit (32) for opening said first electropneumatic valve (31) and causing pressurized fluid to flow to said braking caliper (16) for actuation thereof at said first pressure when a first preset speed is reached.

3. A control unit according to the preceding claim, characterized in that said pneumatic circuit (20) has a first branch (22) and a second branch (23) arranged in parallel, said first branch (22) having said first pneumatic valve (31) and said first electropneumatic valve (41), said second branch (23) having a second pneumatic valve (40) which can be set to a second pressure greater than said first pressure, and a second electropneumatic valve (41) which controls the flow of pressurized fluid and is controlled by said speedometer device driving said electronic control unit (32) for opening said second electropneumatic valve (41) and causing the pressurized fluid to flow to said braking caliper (16) for actuation thereof at said second pressure when a second presettable speed, higher than said first presettable speed, is reached.

4. A control unit, according to any of the preceding claims, characterized in that said electronic control unit (20) has a first and a second boards (32a,32b) for the activation of said first and second electropneumatic valves (31,41) when said first and second presettable speeds are respectively reached, a third and a fourth safety boards (32c,32d) being furthermore provided for respectively activating said first and second electropneumatic valves (31,41) at a speed immediately higher than said first and second presettable speeds.

5. A control unit according to any of the preceding claims, characterized in that said electronic control unit (20) has a fifth board (32e) for detecting lack of air in the pneumatic circuit.

Fig.1

Fig.2

EP 0 381 930 A2

7a

7

2

5

15

6

16

1

Fig.3